# EUROPEAN PATENT SPECIFICATION

(11) **EP 2 070 879 B1**
(45) Date of publication and mention of the grant of the patent: **15.08.2012**
(21) Application number: 08170954.5
(22) Date of filing: 08.12.2008
(51) Int. Cl.: C02F 3/12

(54) **Method of keeping active the activated sludge in a waste water purification unit**
Verfahren zum Erhalten der Belebtschlammaktivität
Procédé pour garder actives les boues activées dans une unité d'épuration des eaux usées

(30) Priority: 07.12.2007 FI 20075884
(43) Date of publication of application: 17.06.2009
(73) Proprietor: Oy KWH Pipe AB, 65101 Vaasa (FI)
(72) Inventor: Hägg, Jan, 66590 Petsmo (FI); Lehto, Jenni, 65170 Vaasa (FI); Lagus, Olai, 66530 Kvevlax (FI)
(74) Representative: Sundman, Patrik Christoffer

(56) References cited:
- EP-A- 1 167 303
- WO-A-2004/009496
- DE-A1- 2 446 289
- DE-A1- 4 225 967
- DE-A1- 10 043 595
- DE-A1- 19 749 975
- DE-A1- 19 830 647
- GB-A- 2 017 672
- US-A- 3 850 801
- US-B1- 7 156 985

## Description

The present invention relates to waste water purification units. The present invention relates in particular to a method according to the preamble of Claim 1 of keeping active the activated sludge in a waste water purification unit.

The biological-chemical batch waste water purification units are working solutions in dwellings which are occupied all year round. A batch purification unit purifies in the process tank a waste water batch of a certain size, in which case the process stages are aeration, chemical feed-in and sedimentation.

During the process, activated sludge is formed in the process tank, which sludge purifies the waste water by breaking up the dirt materials in the waste water. In the activated sludge of the batch purification unit, a specific population is developed. Micro-organisms, such as bacteria, protozoans and algae, live in the activated sludge. The bacteria eat constituents in the waste water whereas the protozoans eat, among other things, bacteria, each other and organic material which is dissolved in the waste water. If no waste water enters into the purification unit, the biology of the activated sludge of the process tank deteriorates gradually and finally the micro-organisms die. Consequently, it is not possible to use batch purification units in households where for a period of some months no waste water enters the purification unit.

The purpose of the present invention is to eliminate at least some of the disadvantages associated with the known technique and to generate a completely new method of keeping active the activated sludge in a waste water purification unit, during periods when the unit is not operating.

The present invention is based on the principle that, during a significant underutilization or a period of inactivity, the activated sludge of a waste water purification unit is aerated and, at the same time, a nutrient solution which comprises a nitrogen source, a phosphor source and a source of organic matter, is fed into the sludge. In this case, the concentration of the organic matter fed in with the nutrient solution is most suitably equivalent to at least essentially the organic matter load which is needed by the activated sludge of the purification unit, i.e. the biological oxygen demand of the waste water which enters the purification unit.

More specifically, the method according to the present invention is mainly characterized by what is stated in the characterizing part of Claim 1.

Considerable advantages can be achieved with the present invention. Accordingly, the present nutrient solution is suitable for any purification units the use of which is discontinuous for periods up to a few months or in which the quality of the waste water varies from concentrated to diluted. While the batch purification unit is waiting for the next batch, i.e. dose to be fed in, the waste water is oxidized. The supply of oxygen makes it possible for the activated sludge to remain alive during periods of non-use and consequently, in that case the only problem which prevents the activated sludge from staying alive is a lack of nutrients for the microbial population in the activated sludge.

There exists methods to keep the activated sludge alive during the periods, when no fresh waste water is supplied to the treatment system - the documents DE 198 30 647, DE 42 25 967, DE 197 49 975, DT 24 46 289 and US 3 850 801 being few examples. These known methods either involve collecting a portion of the raw waste water in a separate tank and using the stored volume in times of no fresh waste water supply, or using the external containers with artificial nutrient solutions.

The present nutrient solution comprises elements which are vital to the microbiology of the activated sludge, such as the nutrients in relation to which the nutrient solution is concentrated. Because of the solution, the activated sludge remains highly concentrated. A sludge which is nourished with the nutrient solution will not weaken and finally die, even though the purification unit is not in use for long periods.

In the following, the present invention will be examined in more detail with the help of a detailed explanation and the accompanying drawing. The drawing shows the basic structure, viewed from the side, of a waste water purification unit which operates using the batch principle.

As mentioned above, the present invention creates an effective method of keeping active the activated sludge in a waste water purification unit during a period of purification inactivity. Here, "a period of inactivity" means such a period outside the normal operation, during which the biological load and the feed of nutrients carried in by the waste water is significantly lower or even totally interrupted. Although the present invention is particularly applied to purification units which are operated using the batch principle, such as the small purification units described above, it can be used in any waste water purification units in which the load carried in by the waste water varies. Here, the load means the total load, including the nutrients and the biological load, carried in by the waste water to the purification unit.

The concentration of the organic matter in the nutrient solution fed in is at least essentially equivalent to the organic matter load which is needed by the activated sludge of the purification unit, i.e. the biological oxygen demand of the waste water which enters the purification unit.

The nutrient solution is fed directly into the activated sludge from a container placed in the process tank. It is also possible to use a container outside the purification unit, from which tank or container feed is led into the process tank, bypassing the storage tank.

According to the present invention, the nutrient solution is fed intermittently. A suitable feeding interval is once every 1-168 hours.

"Intermittently" means that the aeration or nutrient feed, respectively, is discontinuous; periods of aeration or nutrient feed are interspaced by periods of non-aeration or non-feed (periods of corresponding "non-activity" in this respect). Typically, the aeration or nutrient feed periods are shorter than said interspacing periods of non-activity.

The amount of organic matter provided by the nutrient solution into the activated sludge is, calculated for each 24 hour period, at least nearly or essentially the same as the biological oxygen demand of the waste water to be purified during the corresponding period of time during a normal operation stage. Here, "the waste water to be purified" refers to particularly the waste water which is purified in normal situations and to the BOD (Biological Oxygen Demand) of which the activated sludge is matched.

In situations in which waste water is underutilized, i.e. still fed into the purification unit but in volumes less than in normal use, the amount of the organic matter in the nutrient solution at least essentially corresponds in particular to the difference between the BOD of the normally used waste water and that of the underutilized waste water. Biological oxygen demand is normally expressed as the BOD₇ value (i.e. biological oxygen demand during seven days).

It is possible that the biological oxygen demand of the waste water of a waste water purification unit, in particular a small purification unit such as a batch purification unit, varies seasonally. Accordingly, the quantity of waste water which is fed for instance into a batch purification unit of a summer house intermittently used varies according to the season, in which case the quantity is greatest from May to September. It is possible to prepare the nutrient solution to correspond to the BOD of waste water entering a specified target.

It is possible to start the feeding of the nutrient solution when the operational stage has ended, while the activated sludge is still active.

The activated sludge will, between operational stages, consume nutrients fed in by the waste water during a previous operational period, thus successively reducing the concentration of those nutrients.

According to an embodiment, the feeding of the nutrient solution is started before the quantity of the nutrient, carried in by the waste water fed during the operational period, has dropped to below 10 per cent by weight of the average quantity during an operational period. Preferably the feed of the nutrient solution is started before the quantity of nutrient has dropped to below 20 per cent, for instance before it has dropped to below 30 per cent, especially before the nutrient quantity has dropped to below 50 per cent or even before it has dropped before the quantity of nutrient has dropped to below 80 per cent, of the average quantity carried in during the operational period.

According to a specific embodiment, the feeding of the nutrient solution is started immediately after the conclusion of the previous operational period (i.e. as soon as the normal use of the purification plant is ended).

The nutrient solution comprises water as a medium, into which nutrient matters, which are needed to keep active the activated sludge, are dissolved or dispersed.

The nutrient solution fed into the activated sludge comprises a nitrogen source, a phosphor source and a source of organic matter. The content of organic matter fed into the activated sludge depends on the load or organic matter needed by the activated sludge of the purification unit, i.e. the biological oxygen demand of the waste water which is purified in the purification unit. Typically, the concentration or amount of organic matter fed with the nutrient solution corresponds to ± 20 weight-% of the load of organic matter needed by the activated sludge of the purification unit.

The nutrient solution is concentrated in relation to its components.

Thus, the nutrient solution is concentrated in relation to the nitrogen and/or phosphor such that the concentration of these nutrients per unit volume is approximately 10-500 times greater than in the waste water to be purified.

Regarding the BOD₇ value, the concentration of the nutrient solution is approximately 500-2000 times greater than in the waste water to be purified. The difference between the degree of concentration of nitrogen and/or phosphor and that of the organic matter derives from the fact that the activated sludge needs significantly more organic load than nutrient load to stay alive.

When the nutrient solutions are fed into the activated sludge in high concentrations, it is possible to keep their volumes small. Because the nutrients are most suitably mainly in a diluted state, they proceed rapidly into that liquid which in the purification units is kept in liquid contact with the activated sludge.

The organic matter source of the nutrient solution (which also can be referred to as the carbon source) can be any carbon hydrate which is available to the micro-organisms in the activated sludge, such as sugar, starch or lactose or another carbon-bearing material or a mixture of several materials. The material can be in the form of a solution, or a solid or suspension or a mixture thereof. According to an embodiment, the carbon source used is a polysaccharide such as sugar or molasses, or alcohol, such as methanol or glycol or ethanol, or a mixture thereof.

Most suitably, the nutrient solution is a carbon hydrate composition which is used as the carbon source, which composition is enhanced with organic or particularly with inorganic components which comprise nitrogen and phosphor. These can be added into the composition as pure chemicals or chemical mixtures, for instance as fertilizers such as liquid fertilizers for plants.

Thus, basically the present invention comprises a method in which a concentrated nutrient composition is intermittently fed into the active sludge. The nutrient composition is "artificial" in the sense that it is not obtained as such directly by concentrating a natural source of nutrients, but rather composed of at least some nutrient chemicals separately introduced for forming the composition.

Preferably, the BOD₇:P:N weight ratio in the nutrient solution is generally approximately 20-40:0.5-2:5-10, in particular approximately 30-35:0.8-1.5:8-10.

Typically, the fertilizer compositions comprise, besides nitrogen and phosphor, also alkali metals and alkali earth metals, such as potassium, sodium, magnesium or calcium, or mixtures thereof.

Other components are, for example, anti-mould agents. The mixture may also comprise components which control its pH value, and for instance anti-foaming agents, too.

During the feeding stage of the nutrient solution, the activated sludge is aerated.

The aerating is continued preferably during the entire period of inactivity or the period of underutilization. It is possible to carry out the aerating intermittently or continuously. In the case of the intermittent aerating, the activated sludge is aerated at least once every 24 hours, most suitably once every 1-12 hours. The length of the aerating stage is approximately 1-300 minutes, according to the frequency of the aerating. Most suitably, the aerating mode is 10-75 minutes of aerating every 1.5-6 hours.

Generally, the aim is to dissolve approximately 1-10 mg oxygen/I, most suitably at least approximately 2 mg oxygen/I, by means of the aerating. The temperature is kept at approximately 5-25 °C.

According to one embodiment, after stopping the feed of a preceding operational stage, the aerating of the activated sludge in the liquid stage is continued - either continuously or intermittently - and the feeding of the nutrient solution is started. When the activated sludge is aerated intermittently, it is possible to lengthen, during the periods of inactivity or underutilization, the interval between the stages by between 1.5 and 5 times compared to the aerating during a normal operational stage.

The nutrient solution is fed from a nutrient solution container placed in the process tank. This solution is illustrated in the accompanying drawing. It is also possible to place the nutrient solution container on the side of the storage tank, in a pre-existing tank of a purification unit, or it can be placed outside the purification unit.

The drawing shows the principle structure of a batch purification unit. The following reference numbers are used in the drawing:
1. storage tank
   1a. engine compartment
2. process tank
3. junction between the tanks
4. input
5. transfer pump
6. pipe of the transfer pump
7. control centre
8. level controller of the transfer pump
9. aerator trays
10. pipe of the aerator trays
11. compressor
12. process gauge
13. chemical pump control
14. chemical pump
15. chemical hose
16. exit pump
17. exit
18. sludge pump
19. pipe of sludge pump
20. basket for the surplus sludge
21. engine compartment base
22. nutrient solution container with supports
23. nutrient solution pump
24. nutrient solution feed

The purification unit shown in the drawing is designed for purification of residential waste water. It comprises two basic parts, namely the storage tank 1, in which the waste water to be purified is fed through the input pipe 4, and the process tank 2, in which the actual purification is carried out with the help of activated sludge and a chemical. The tanks 1 and 2 are, actually, separate units, which are connected to each other via a junction 3. The waste water is pumped from the storage tank 1 into the process tank 2 by using the transfer pump 5, which is controlled by the level controller 8. The level controller switches the transfer pump on when the level of the waste water fed into the storage tank exceeds a preset limit, in which case the waste water is pumped through the junction 3 by means of the transfer pipe 6 which is arranged so that it opens into the process tank 2.

The control centre 7 of the apparatus, with which the operation of the entire unit is controlled, is placed in the engine compartment 1a which is housed the storage tank. The reference number 21 refers to the base of the engine compartment which divides the storage tank unit into two parts. By placing the control centre 7, including the engine compartment, 1a inside the storage tank 1, the control centre is effectively separated and insulated from the surrounding space. In addition, a compressor 11 is placed in the engine compartment, which compressor produces compressed air which can be pumped into the waste water to be treated in the process tank, with the help of the aerating pipe 10 and the aerator trays 9 which are placed at the end of that pipe and below the level of the surface of the liquid. Furthermore, a chemical pump 14 is arranged in the engine compartment together with its control unit 13 and chemical hose 15. The pump 14 is used for pumping chemicals into the storage tank 2.

Besides the aerator trays/pipe, the process tank of the apparatus comprises the sludge pump 18, with which it is possible to remove sludge that accumulates in the bottom part of the tank. In order to collect the sludge, a container for the surplus sludge, i.e. a basket 20 which is connected to the sludge pump through the sludge pipe 19.

The waste water which is pumped into the process tank is aerated by bubbling air into water through the aerator trays, in which case the sludge, i.e. activated sludge, which comprises micro-organisms, starts to form in the process tank. Due to the effect of these micro-organisms/microbes the nutrients in the waste water break up which then form a gas and disintegration products which dissolve in the liquid. The latter ones settle in the sludge, whereby an activated sludge layer is formed, whereas the purified water stays on the top of the activated sludge layer. This water is regularly removed from the tank by using the exit pumping pump 16. The operation of this pump is controlled with the help of the process gauge 12. The pump is connected to the exit 17 of the process container.

The functioning of the activated sludge is reduced when the waste water feed is interrupted, temporarily or permanently, or when the quality of the waste water becomes significantly diluted. Consequently, in the method according to the present invention, substitute nutrient is, in this case, fed into the activated sludge from the nutrient solution container 22, which is placed in the process tank, by way of the nutrient solution pump 23 and nutrient solution pipe 24. From the pipe, the nutrient solution runs into the activated sludge. The container 22 is placed inside the process tank 2, in which case it is possible to ensure that it is insulated from heat.

The nutrient solution container is dimensioned in such a way that the amount of the nutrient solution, which is held in it, is adequate to keep active the activated sludge for at least three, preferably for three to six months.

The dosing quantities of the nutrient solution delivered from the container 22 and the intervals of that delivery vary according to the size of the purification plant, i.e. they are chosen according to the volume of the activated sludge.

The solution according to the present invention makes it possible to feed the activated sludge continuously for at least five (5) months. During this time, the activated sludge in the purification plant does not need waste water. Consequently, a small purification plant is most suitable for summer cottage use.

When the purification unit resumes operating, the resulting purification of the waste water will be good in less than a week. The nutrient solution will not cause materials which are harmful to the environment to accumulate in the batch purification plant, but the solution is totally biodegradable. In addition, the solution helps to keep the pH of the activated sludge as even as possible and optimal in the activated sludge process.

The nutrient solution and the apparatus it requires are delivered to the purification unit separately. No changes to a standard purification plant are required. Most suitably, the concentration of the BOD of the nutrient solution corresponds to the organic load which is needed by the activated sludge of the purification unit, which load is typically BHK7 333 mg per litre of the waste water to be purified. By the quantity of feed a suitable quantity of solution for purification units of different size is adjusted according to the amount of activated sludge.

### Example

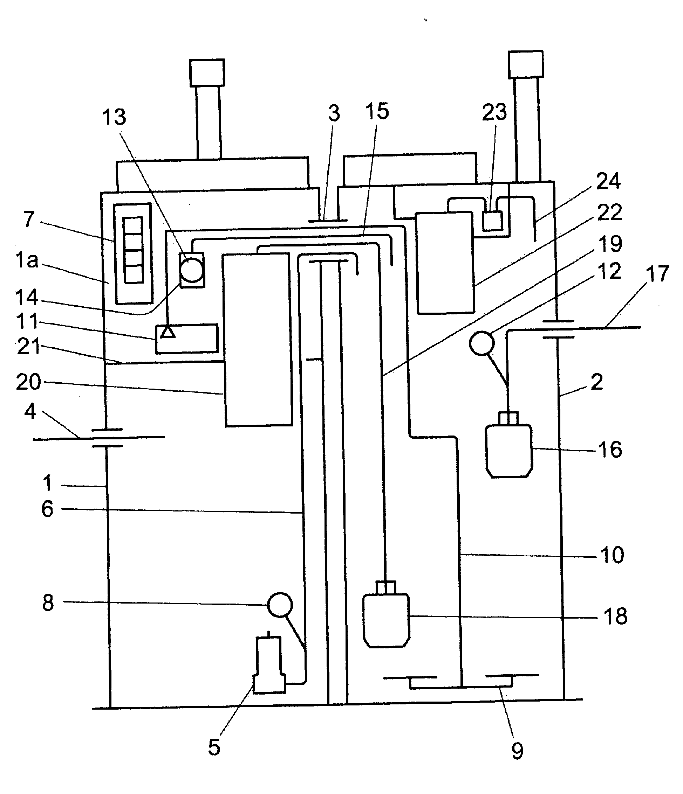

It has been noted that aeration alone will fail to maintain the vitality of the micro-organisms in the activated sludge in a batch purification unit over long-term operational inactivity. To remain alive, the organisms in the activated sludge need, besides oxygen, a carbon source and certain nutrients. Long-term periods of inactivity in waste water purification units are normal for instance at summer cottage sites. The nutrient solution feed has been tested at a batch-operated small purification unit, WehoPuts 6 supplied by Oy KWH Pipe Ab, Vaasa, Finland. The construction of the two-chamber waste water purification plant corresponds essentially to that shown in Figure 1. The nutrient solution feed period started in April, 2007. The purpose of the test was to establish the effect of the nutrient solution feed, which was carried out every second day on the activated sludge. Previous tests showed that feeding carried out every day was workable.

The composition of the solution simulated the average concentrations of domestic waste water: biological oxygen demand BOD₇ 333 mg/l, total nitrogen N 93.3 mg/l and phosphor P 14.9 mg/l. Anti-mould agent was added to the solution. The carbon source, i.e. the organic matter, was a sugar-based material (molasses) and the nutrients come from the fertilizer (in this case mixed fertilizer Starex 15, which is sold by Kekkilä Oyj, Tuusula, Finland), which is added to the intermediate agent of the solution, i.e. the water.

Every second day, 460 ml of the solution was added to the WehoPuts 6 small purification unit. The solution was dosed from a rack supporting a vessel, a pump and a timer. No waste water entered into the purification unit for 140 days - the process stage was throughout that time inactive. During this inactive period, the purification unit intermittently aerated the activated sludge, an action which is a precondition for ensuring the activated sludge stays alive. The volume of air used for this aeration was 10 cubic metres, introduced every 24 hours, per one cubic metre of waste water.

After 140 days, the activated sludge, which had been fed with the nutrient solution, attained a good level both regarding the protozoans and also the examined concentrations. Waste water was then fed into the purification unit with the aim of checking how effective the activated sludge was in purifying the waste water following the period of inactivity. Already after six purification processes the exiting waste water values were excellent. If no waste water had been brought into the purification plant and if the nutrient solution feed had been stopped, the activated sludge would, under conditions of only aeration, have maintained its vitality at maximum for approximately 1 to 2 months.

## Claims

1. A method of keeping active the activated sludge in a waste water batch purification plant, designed for purification of residential waste water, during a period of inactivity, **characterized in that**
- the activated sludge is aerated and a nutrient solution is intermittently fed into it, which solution comprises a nitrogen source, a phosphor source and a source of organic matter, the concentration of which organic matter at least essentially corresponds to the biological oxygen demand of the waste water entering the batch purification plant, and
- the nutrient solution, which comprises water as a medium, is concentrated such that, in relation to the nitrogen and phosphor, the concentration per unit volume is approximately 10 to 500 times greater and, in relation to the organic matter, the concentration per unit volume is approximately 500 to 2000 times greater, than in the waste water to be purified,
the nutrient solution being fed from a nutrient solution container which is placed in the process tank of the batch purification unit.

2. The method according to Claim 1, **characterized in that** the nutrient solution is fed once every 1-168 hours.

3. The method according to Claim 1 or 2, **characterized in that** the feeding of the nutrient solution is started before the quantity of the nutrients and the organic substances which have entered together with waste water which was fed in during the operational stage has decreased.

4. A method according to any of Claims 1-3, **characterized in that** the activated sludge is aerated intermittently.

5. The method according to Claim 4, **characterized in that** the activated sludge is aerated once every 1-12 hours.

6. The method according to any of the preceding claims, **characterized in that** the nutrient solution comprises a carbon source which is a polysaccharide, such as sugar or molasses, or starch or lactose or alcohol, such as methanol, glycol or ethanol, or a mixture thereof.

7. The method according to any of the preceding claims, **characterized in that** the nutrient solution comprises an anti-mould agent.

8. The method according to any of the preceding claims, **characterized in that** in the nutrient solution, the weight ratio Biological Oxygen Demand (BOD₇) to P to N is generally 20-40:0.5-2:5-10, in particular about 30-35:0.8-1.5:8-10.

9. The method according to any of the preceding claims, **characterized in that**, subsequent to the termination of the feeding in the previous operational period, the aerating of the activated sludge is continued and the feeding in of the nutrient solution is started.

10. The method according to any of the preceding claims, **characterized in that** the method is applied in such a way that it keeps the activated sludge active in a waste water purification unit which is operated by applying the batch principle, during the period of inactivity between two operational periods.

11. The method according to any of the preceding claims, **characterized in that** the nutrient composition is fed directly into the activated sludge of the waste water purification plant.

## Patentansprüche

1. Verfahren zum Aktivhalten des Belebtschlamms in einer zur Reinigung von Siedlungsabwasser vorgesehenen Abwasserchargenreinigungsanlage, vorgesehen während eines Inaktivitätszeitraums, **dadurch gekennzeichnet, dass**
- der Belebtschlamm belüftet wird und diesem periodisch eine Nährstofflösung zugeführt wird, wobei die Lösung eine Stickstoffquelle, eine Phosphorquelle und eine Quelle für organische Substanzen umfasst, wobei die Konzentration der organischen Substanzen zumindest im Wesentlichen dem biologischen Sauerstoffbedarf des in die Chargenreinigungsanlage eintretenden Abwassers entspricht, und
- die Wasser als Medium umfassende Nährstofflösung derart konzentriert ist, dass die Konzentration pro Volumeneinheit in Bezug auf den Stickstoff und Phosphor etwa 10 bis 500 mal größer ist und die Konzentration pro Volumeneinheit in Bezug auf die organischen Substanzen etwa 500 bis 2000 mal größer ist als das zu reinigende Abwasser,
wobei die Nährstofflösung aus einem Nährstofflösungsbehälter zugeführt wird, der sich im Prozesstank der Chargenreinigungseinheit befindet.

2. Verfahren nach Anspruch 1, **dadurch gekennzeichnet, dass** die Nährstofflösung einmal alle 1-168 Stunden zugeführt wird.

3. Verfahren nach Anspruch 1 oder 2, **dadurch gekennzeichnet, dass** das Zuführen der Nährstofflösung gestartet wird, bevor die Menge der Nährstoffe und der organischen Substanzen, die zusammen mit dem während der Betriebsstufe zugeführten Abwasser eingetreten sind, abgenommen hat.

4. Verfahren nach einem der Ansprüche 1-3, **dadurch gekennzeichnet, dass** der Belebtschlamm periodisch belüftet wird.

5. Verfahren nach Anspruch 4, **dadurch gekennzeichnet, dass** der Belebtschlamm einmal alle 1-12 Stunden belüftet wird.

6. Verfahren nach einem der vorangehenden Ansprüche, **dadurch gekennzeichnet, dass** die Nährstofflösung eine Kohlenstoffquelle umfasst, die ein Polysaccharid, wie Zucker oder Molasse, oder Stärke oder Lactose oder Alkohol, wie Methanol, Glycol oder Ethanol, oder ein Gemisch davon ist.

7. Verfahren nach einem der vorangehenden Ansprüche, **dadurch gekennzeichnet, dass** die Nährstofflösung ein Antischimmelmittel umfasst.

8. Verfahren nach einem der vorangehenden Ansprüche, **dadurch gekennzeichnet, dass** das Gewichtsverhältnis des biologischen Sauerstoffbedarfs (Biological Oxygen Demand; BOD₇) zu P zu N in der Nährstofflösung im Allgemeinen 20-40:0,5-2:5-10, insbesondere 30-35:0,8-1,5:8-10 beträgt.

9. Verfahren nach einem der vorangehenden Ansprüche, **dadurch gekennzeichnet, dass** das Belüften des Belebtschlamms nach der Beendigung des Zuführens der vorangehenden Betriebsdauer fortgesetzt wird und das Zuführen der Nährstofflösung gestartet wird.

10. Verfahren nach einem der vorangehenden Ansprüche, **dadurch gekennzeichnet, dass** das Verfahren in einer derartigen Weise angewandt wird, dass es den Belebtschlamm in einer durch Anwendung des Chargenprinzips betriebenen Abwasserreinigungseinheit während des Inaktivitätszeitraums zwischen zwei Betriebsdauern aktiv hält.

11. Verfahren nach einem der vorangehenden Ansprüche, **dadurch gekennzeichnet, dass** die Nährstoffzusammensetzung direkt dem Belebtschlamm der Abwasserreinigungsanlage zugeführt wird.

## Revendications

1. Procédé pour maintenir actives les boues activées dans une usine de purification discontinue d'eaux usées, destinée à l'épuration des eaux usées domestiques, au cours d'une période d'inactivité, **caractérisé en ce que**
- les boues activées sont aérées et une solution nutritive est introduite de manière intermittente dans celles-ci, solution qui comprend une source d'azote, une source de phosphore et une source de matières organiques, dont la concentration en matières organiques correspond au moins essentiellement à la demande en oxygène biologique des eaux usées pénétrant dans l'usine de purification discontinue, et
- la solution nutritive, qui comprend de l'eau comme milieu, est concentrée de telle sorte que, par rapport à l'azote et au phosphore, la concentration par volume unitaire soit approximativement 10 à 500 fois supérieure et, par rapport à la matière organique, la concentration par volume unitaire soit approximativement 500 à 2000 fois supérieure, à celle dans les eaux usées à purifier,
la solution nutritive étant amenée d'un récipient de solution nutritive qui est placé dans le réservoir de traitement de l'unité de purification discontinue.

2. Procédé suivant la revendication 1, **caractérisé en ce que** la solution nutritive est introduite une fois toutes les 1 à 168 heures.

3. Procédé suivant la revendication 1 ou 2, **caractérisé en ce que** l'introduction de la solution nutritive est commencée avant que la quantité des substances nutritives et des substances organiques qui ont pénétré conjointement avec les eaux usées introduites au cours de l'étape opérationnelle ait diminué.

4. Procédé suivant l'une quelconque des revendications 1 à 3, **caractérisé en ce que** les boues activées sont aérées de manière intermittente.

5. Procédé suivant la revendication 4, **caractérisé en ce que** les boues activées sont aérées une fois toutes les 1 à 12 heures.

6. Procédé suivant l'une quelconque des revendications précédentes, **caractérisé en ce que** la solution nutritive comprend une source de carbone qui est un polysaccharide, tel qu'un sucre ou la mélasse, ou l'amidon ou le lactose ou un alcool, tel que le méthanol, un glycol ou l'éthanol, ou bien un de leurs mélanges.

7. Procédé suivant l'une quelconque des revendications précédentes, **caractérisé en ce que** la solution nutritive comprend un agent anti-moisissure.

8. Procédé suivant l'une quelconque des revendications précédentes, **caractérisé en ce que**, dans la solution nutritive, la demande d'oxygène biologique en rapport pondéral (BOD₇) à P à N est généralement de 20-40:0,5-2:5-10, en particulier d'environ 30-35:0,8-1,5:8-10.

9. Procédé suivant l'une quelconque des revendications précédentes, **caractérisé en ce que**, après l'achèvement de l'introduction dans la période opérationnelle précédente, l'aération des boues activées est continuée et l'introduction de la solution nutritive est commencée.

10. Procédé suivant l'une quelconque des revendications précédentes, **caractérisé en ce qu'**il est mis en oeuvre de telle sorte qu'il maintienne actives les boues activées dans une usine de purification des eaux usées qui fonctionne en appliquant le principe de fonctionnement discontinu, pendant la période d'inactivité entre deux périodes opérationnelles.

11. Procédé suivant l'une quelconque des revendications précédentes, **caractérisé en ce que** la composition nutritive est introduite directement dans les boues activées de l'usine de purification d'eaux usées.
